# EUROPEAN PATENT APPLICATION

(11) **EP 1 722 260 A1**
(43) Date of publication of application: **15.11.2006**
(21) Application number: 05709539.0
(22) Date of filing: 01.02.2005
(51) Int. Cl.: G02B 7/36, H04N 5/232

(54) **AUTOFOCUS CONTROLLING APPARATUS AND METHOD, RECORDING MEDIUM, AND PROGRAM**

(30) Priority: 02.03.2004 JP 2004058086
(71) Applicant: SONY CORPORATION, Tokyo 141-0001 (JP)
(72) Inventor: OKAZAKI, Sakae c/o Sony Corporation, Shinagawa-ku, Tokyo 1410001 (JP)
(74) Representative: Jackson, Jonathan Andrew
(86) International application number: PCT/JP2005/001393
(87) International publication number: WO 2005/085928

(57) **Abstract**

The present invention makes it possible to enhance the automatic focusing response characteristic. An image pickup sensor performs light exposure ex11 and ex12 in synchronization with an image vertical synchronizing signal VP (waveform A in FIG. 7). A camera signal processing section reads out the image signal obtained by the light exposure ex11 at a timing VR12 (waveform D in FIG. 7). An AF detection section extracts high-frequency components of an image signal corresponding to an AF detection reduction gate frame (hereinafter referred to simply as gate frame) at a timing of the gate frame and performs rectification detection. Then the AF detection section produces a focus evaluation value just after the timing of the gate frame. An AF module fetches the produced focus evaluation value at a timing of an AF module 21 (waveform F in FIG. 7), and produces an automatic focusing control signal LD22 for bringing a focusing position close to an in-focus position (waveform G in FIG. 7) and moves a focusing lens based on the produced control signal. The present invention can be applied to a video camera.

## Description

### [Technical Field]

This invention relates to an automatic focusing control apparatus and method, a recording medium and a program, and particularly to an automatic focusing control apparatus and method, a recording medium and a program wherein a response characteristic of automatic focusing can be enhanced by high-speed light exposure.

### [Background Art]

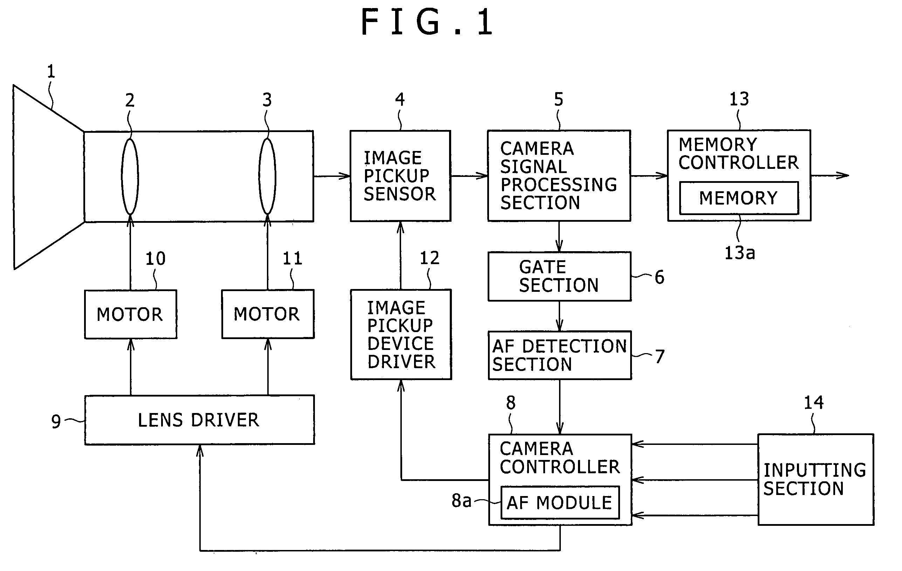

FIG. 1 is a block diagram showing an example of a configuration of a video camera in related art.

A lens block 1 including a zoom lens 2 and a focus lens 3 emits light (that is, an image of a subject) to an image pickup sensor 4. The image pickup sensor 4 includes two-dimensionally disposed photoelectric conversion devices for performing photoelectric conversion such as those of a CCD (Charge Coupled Device) imager or a C-MOS (Complementary Metal Oxide Semiconductor) imager. A primary color filter (not shown) wherein R, G and B pixels are arranged in mosaic is mounted on a front face of the image pickup sensor 4. In particular, the image pickup device 4 performs photoelectric conversion of a light image of the subject incoming through the lens block 1 and the primary color filter to produce an image pickup signal (charge) and outputs the produced image pickup signal to a camera signal processing section 5 in accordance with a raster scanning method.

The camera signal processing section 5 performs a sampling process, a YC separation process and so forth for the image pickup signal inputted thereto from the image pickup sensor 4. The camera signal processing section 5 outputs a luminance signal Y to a gate section 6 and outputs the luminance signal Y and a color signal C (color difference signal, primary color signals or the like) to a memory controller 13.

The gate section 6 extracts only a signal corresponding to an in-focus detection region within a screen set in advance from within an image signal inputted thereto and outputs the extracted signal to an AF (automatic focusing) detection section 7. The AF detection section 7 extracts high-frequency components of the inputted image signal which corresponds to the in-focus detection region and rectifies and detects the extracted high-frequency components to produce a focus evaluation value necessary for automatic focusing. The AF detection section 7 outputs the produced focus evaluation value to an AF module 8a of a camera controller 8.

The camera controller 8 controls driving of a lens driver 9 and an image pickup device driver 12 based on a manual focusing instruction signal, a zooming instruction signal, a manual/automatic focusing changeover signal and so forth inputted thereto from an inputting section 14. Further, the AF module 8a of the camera controller 8 controls the lens driver 9 based on the focus evaluation value obtained from the image signal so as to cause the lens driver 9 to perform automatic focusing driving.

The lens driver 9 controls driving of a motor 10 for driving the zoom lens 2 and a motor 11 for driving the focusing lens 3 under the control of the camera controller 8. The motors 10 and 11 control driving of the zoom lens 2 or the focusing lens 3 under the control of the lens driver 9, respectively. The image pickup device driver 12 controls the image pickup sensor 4 to perform photoelectric conversion for a light image of a subject incoming through the lens block 1 and the primary color filter (not shown) to produce an image pickup signal and controls driving of an electronic shutter (not shown).

The memory controller 13 temporarily stores the image signal inputted from the camera signal processing section 5 into a memory 13a, and successively reads out and outputs the image signal to a display unit (not shown) so as to be displayed as an image or outputs the image signal to a removable medium (not shown) to record the image signal on the removable medium. The inputting section 14 is operated by a user, and inputs various instruction signals from the user to the camera controller 8.

In the video camera in related art, high-frequency components of an image signal obtained by the image pickup sensor 4 are determined as a focus evaluation value, and the focusing lens 3 is driven so as to increase the focus evaluation value. Automatic focusing is implemented by using the method just described which is called hill-climbing automatic focusing method.

Here, automatic focusing is described in detail.

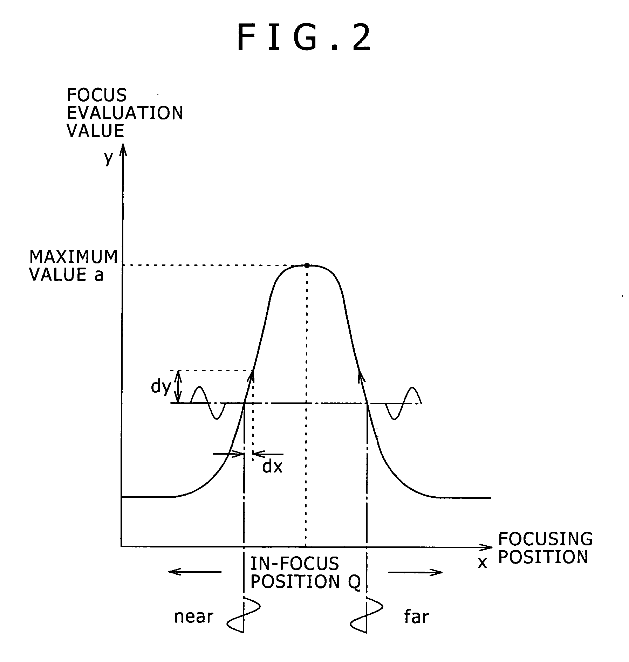

FIG. 2 shows an example of the variation of the focus evaluation value necessary for automatic focusing outputted from the AF detection section 7 in FIG. 1. In FIG. 2, the axis of abscissa (x axis) indicates the focusing position of the focusing lens 3 and the axis of ordinate (y axis) indicates the focus evaluation value.

As shown in FIG. 2, if the focusing position of the focusing lens 3 is moved from a far direction to a near direction, or from a near direction to a far direction, then the focus evaluation value assumes a maximum value a at a predetermined position. Generally, the position at which the focus evaluation value assumes the maximum value a is called [crest of evaluation value], the focusing position of the focusing lens 3 at which the focus evaluation value indicates the maximum value a is an in-focus position Q with respect to the subject.

Accordingly, the AF module 8a fetches the focus evaluation value inputted from the AF detection section 7 and performs [hill-climbing control] wherein the focus lens 3 is moved so that the evaluation value may become a maximum value. Further, at this time, in order to detect in what direction an in-focus position is from the current focusing position, the AF module 8a finely oscillates the focusing position of the focusing lens 3, and assumes a direction to the in-focus position based on the positive or negative sign of a derivative component dy/dx of the evaluation value obtained then. Generally, fine oscillation of the focusing position is called wobbling.

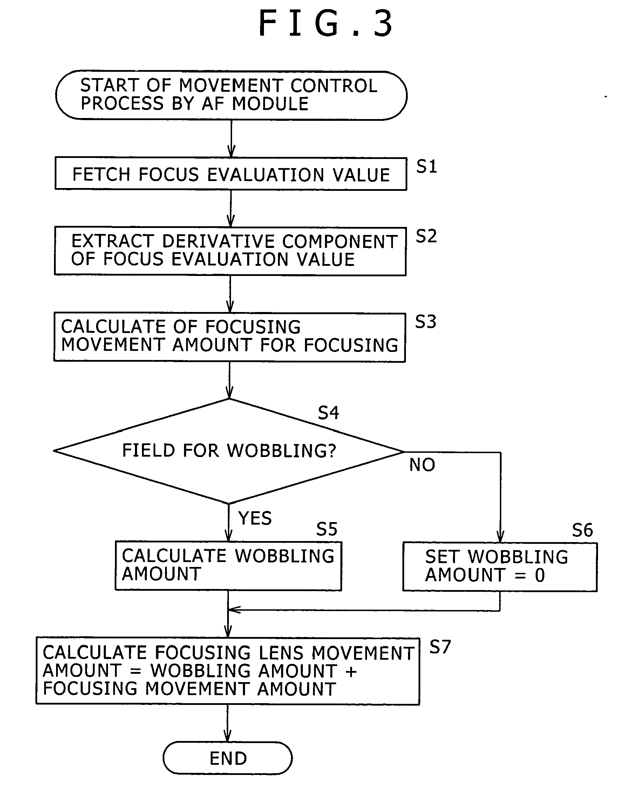

Next, a movement control process of the focusing lens 3 by the AF module 8a is further described with reference to a flow chart of FIG. 3. It is to be noted that the movement control process is repetitively performed in a cycle of one field.

At step S1, the AF module 8a fetches a focus evaluation value from the AF detection section 7, and at step S2, the AF module 8a extracts a derivative component dy/dx of the focus evaluation value and estimates an in-focus position direction. At step S3, the AF module 8a calculates a movement amount (focusing movement amount) of the focusing lens 3 for bringing a focusing position close to the in-focus position Q (FIG. 2), that is, for focusing, based on the focus evaluation value.

At step S4, the AF module 8a decides whether or not the field at present is a field wherein movement of the focusing position through wobbling is to be performed. If it is decided that the field at present is a field wherein movement of the focusing position through wobbling is to be performed, then the processing advances to step S5. At step S5, the movement amount (wobbling movement amount) of the focusing lens 3 through wobbling is calculated.

If it is decided at step S4 that the field at present is not a field wherein movement of the focusing position through wobbling is to be performed, then the processing advances to step S6, at which the AF module 8a sets the wobbling amount to zero.

After the processing at step S5 or S6 is performed, at step S7, the AF module 8a calculates the sum of the focusing movement amount calculated in the processing at step S3 and the wobbling amount calculated in the processing at step S5 or step S6, and sets the calculated sum as the movement amount of the focusing lens 3. The AF module 8a controls the lens driver 9 based on the calculated movement amount of the focusing lens 3. The lens driver 9 moves the focusing lens 3 by a predetermined focusing lens movement amount through the motor 11 under the control of the AF module 8a.

In this manner, the AF module 8a determines the derivative component dy/dx of the focus evaluation value obtained by wobbling of the focusing lens 3 and moves the focusing lens 3 so as to bring the focusing position close to the in-focus position to implement automatic focusing.

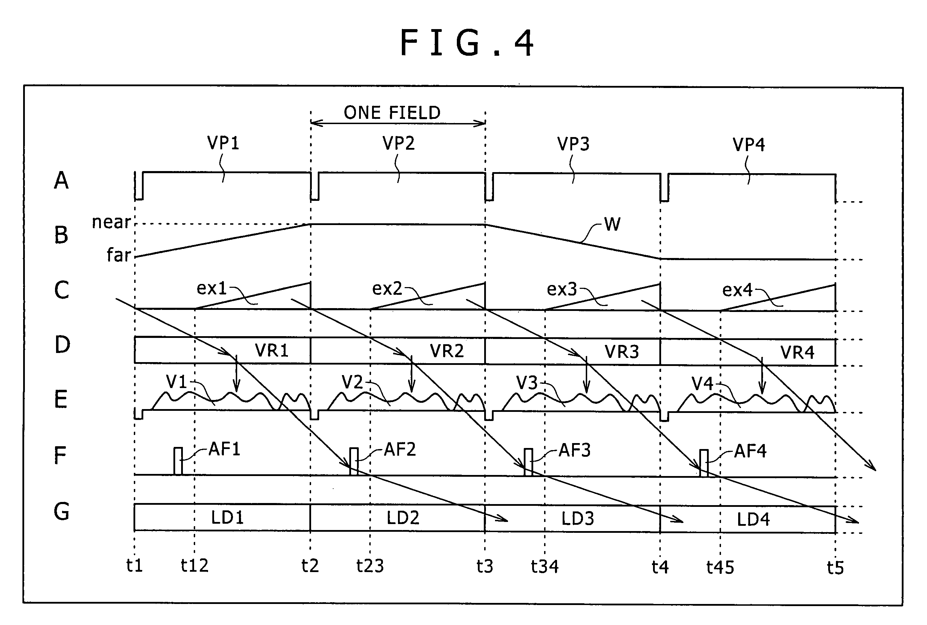

Next, operation of the video camera of FIG. 1 is described with reference to a timing chart of FIG. 4. In this example, operation where light exposure by the image pickup sensor 4 is performed once for each one field and wobbling driving is performed in a four-field cycle is described.

The camera controller 8 outputs image vertical synchronizing signals VP1 to VP4 to the image pickup device driver 12 for periods of time from time t1 to time t2, from time t2 to time t3, from time t3 to time t4 and from time t4 to time t5 (waveform A in FIG. 4). The periods of time of the image vertical synchronizing signals individually represent a period of time of one field.

The focusing position of the focusing lens 3 is controlled in a unit of a field, and the focusing position W by wobbling is controlled so as to alternately move in a far direction and a near direction at intervals of one field with a stopping period of time of one field interposed therebetween (waveform B in FIG. 4).

The image pickup device driver 12 controls the image pickup sensor 4 in synchronization with the image vertical synchronizing signals VP1 to VP4 inputted thereto to perform light exposure ex1 to ex4 for periods of time from time t12 to time t2, from time t23 to time t3, from time t34 to time t4 and from time t45 to time t5, respectively (waveform C in FIG. 4).

The camera signal processing section 5 reads out an image signal obtained by the light exposure ex1 at a timing VR2 from time t2 to time t3 (waveform D in FIG. 4). Similarly, the camera signal processing section 5 reads out image signals obtained by the light exposure ex2 to ex4 at timings VR3 to VR5, respectively (timing VR 5 is not shown). Consequently, the camera signal processing section 5 obtains image signals V1 to V4 read out at the individual timings (waveform E in FIG. 4). The image signals V1 to V4 read out by the camera signal processing section 5 are outputted to the gate section 6.

Here, though not shown, only an image signal corresponding to an AF detection gate frame which is an in-focus detection region in a screen set in advance from within each of the image signals inputted from the camera signal processing section 5 is extracted by the gate section 6. The extracted signal is outputted to the AF detection section 7.

The AF detection section 7 extracts high-frequency components of the inputted image signal V1 at a timing at which only an image signal corresponding to an AF detection gate frame is extracted (hereinafter referred to as timing of an AF detection gate frame) and performs rectification detection. Then, the AF detection section 7 produces a focus evaluation value necessary for automatic focusing just after the timing of the AF detection gate frame. Similarly, the AF detection section 7 extracts high-frequency components of the inputted image signals V2 to V4 each at the timing of an AF detection gate frame and performs rectification detection. Then, the AF detection section 7 produces a focus evaluation value necessary for automatic focusing just after the timing of the AF detection gate frame.

The focus evaluation value produced by the AF detection section 7 is outputted to the AF module 8a of the camera controller 8.

The AF module 8a fetches the focus evaluation value produced just after the timing of the AF detection gate frame at another timing of an AF module AF2 (waveform F in FIG. 4). Then, the AF module 8a produces an automatic focusing control signal LD3 for bringing the focusing position of the focusing lens 3 close to the in-focus position and outputs the produced signal to the lens driver 9 (waveform G in FIG. 4). Similarly, the AF module 8a fetches the focus evaluation value produced just after the timing of the AF detection gate frame at a further timing of an AF module AF3 which is a timing of a next image vertical synchronizing signal VP3. Then, the AF module 8a produces an automatic focusing control signal LD4 for bringing the focusing position of the focusing lens 3 close to the in-focus position and outputs the produced signal to the lens driver 9.

The lens driver 9 controls driving of the motor 11 based on the automatic focusing control signals LD1 to LD4 inputted thereto to move the focusing lens 3 by a predetermined focusing lens movement amount. The automatic focusing is implemented in this manner.

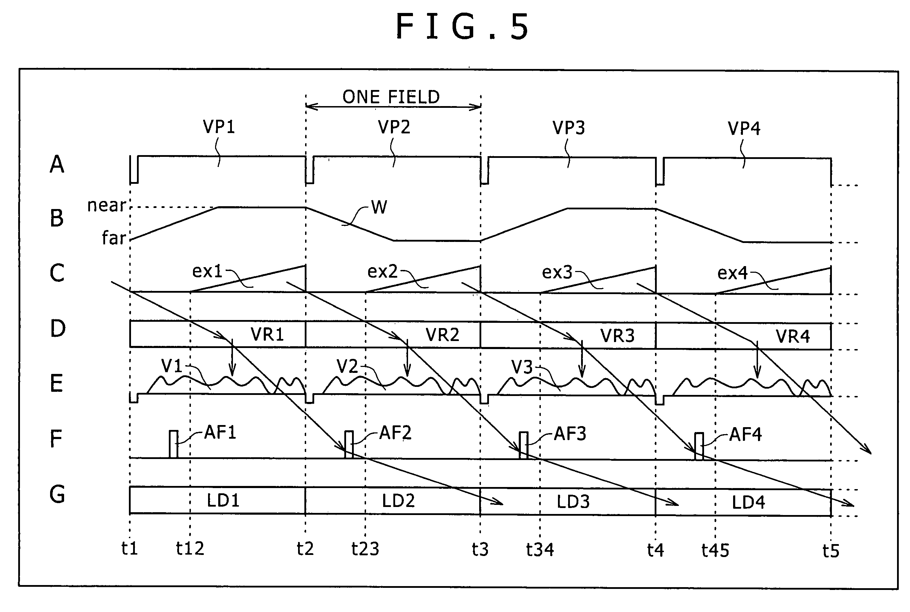

Next, another example of operation of the video camera of FIG. 1 is described with reference to a timing chart of FIG. 5. In this example, operation where light exposure by the image pickup sensor 4 is performed once for each one field and wobbling driving is performed in a two-field cycle is described.

The camera controller 8 outputs the image vertical synchronizing signals VP1 to VP4 to the image pickup device driver 12 for periods of time from time t1 to time t2, from time t2 to time t3, from time t3 to time t4 and from time t4 to time t5 (waveform A in FIG. 5). Each of the periods of the image vertical synchronizing signal represents a period of one field.

The focusing position of the focusing lens 3 is controlled in a unit of a field, and the focusing position W by wobbling is controlled so as to alternately move in a far direction and a near direction at intervals of a 1/2 field with a stopping period of time of a 1/2 field interposed therebetween (waveform B in FIG. 5).

The image pickup device driver 12 controls the image pickup sensor 4 in synchronization with the image vertical synchronizing signals VP1 to VP4 inputted thereto to perform light exposure ex1 to ex4 for periods of time from time t12 to time t2, from time t23 to time t3, from time t34 to time t4 and from time t45 to time t5, respectively (waveform C in FIG. 5).

The camera signal processing section 5 reads out the image signal obtained by the light exposure ex1 at a timing VR2 from time t2 to time t3 (waveform D in FIG. 5). Similarly, the camera signal processing section 5 reads out the image signals obtained by the light exposure ex2 to ex4 at timings VR3 to VR5, respectively (timing VR5 is not shown). Consequently, the camera signal processing section 5 obtains the image signals V1 to V4 read out at the different timings (waveform E in FIG. 5). The image signals V1 to V4 read out by the camera signal processing section 5 are outputted to the gate section 6.

Here, though not shown, only an image signal corresponding to the AF detection gate frame which is an in-focus detection region in a screen set in advance from within each of the image signals inputted from the camera processing section 5 is extracted by the gate section 6, and the extracted signal is outputted to the AF detection section 7.

The AF detection section 7 extracts high-frequency components of the inputted image signal V1 at the timing of the AF detection gate frame and performs rectification detection, and produces a focus evaluation value necessary for automatic focusing just after the timing of the AF detection gate frame. Similarly, the AF detection section 7 extracts high-frequency components of each of the inputted image signals V2 to V4 at the timing of the AF detection gate frame and performs rectification detection, and produces a focus evaluation value necessary for automatic focusing just after the timing of the AF detection gate frame.

The focus evaluation value produced by the AF detection section 7 is outputted to the AF module 8a of the camera controller 8.

The AF module 8a fetches the focus evaluation value produced just after the timing of the AF detection gate frame at a timing of an AF module AF2 (waveform F in FIG. 5). Then, the AF module 8a produces an automatic focusing control signal LD3 for bringing the focusing position of the focusing lens 3 close to the in-focus position and outputs the produced signal to the lens driver 9 (waveform G in FIG. 5). Similarly, the AF module 8a fetches the focus evaluation value produced just after the timing of the AF detection gate frame at a timing of an AF module AF3 which is a timing of a next image vertical synchronizing signal VP3. Then, the AF module 8a produces an automatic focusing control signal LD4 for bringing the focusing position of the focusing lens 3 close to the in-focus position and outputs the produced signal to the lens driver 9.

The lens driver 9 controls driving of the motor 11 based on the inputted automatic focusing control signals LD1 to LD4 to move the focusing lens 3 by a predetermined focusing lens movement amount. The automatic focusing is implemented in this manner.

As described above, the video camera in related art extracts high-frequency components of an image signal obtained by the image pickup sensor 4 and performs rectification detection, and then produces a focus evaluation value necessary for automatic focusing and drives the focusing lens 3 so as to increase the evaluation value. Further, the video camera in related art performs fine wobbling focusing driving to change the distance between the focusing lens 3 and the image pickup sensor 4 to such a degree that the movement is not remarkable on a picked up image. Thus, the video camera in related art obtains information regarding hill-climbing control (for example, information for deciding a hill-climbing direction and so forth) from a very small variation of the focus evaluation value.

Incidentally, in recent years, various techniques regarding automatic focusing have been proposed, and, for example, a technique is disclosed wherein moving time of a focusing lens is reduced to reduce the power consumption (for example, refer to Patent Document 1).

[Patent Document 1]
Japanese Patent Laid-open No. Hei 10-239579

### [Disclosure of the Invention]

### [Problem to be Solved by the Invention]

Since the focusing evaluation value is produced only once every time the image vertical synchronizing signal is outputted as described above, the video camera in related art has a subject to be solved that the automatic focusing response characteristic is poor.

The present invention has been made in view of such a situation as described above and makes it possible to enhance the automatic focusing response characteristic.

### [Means for Solving the Problem]

An automatic focusing control apparatus of the present invention includes an image pickup section configured to pick up an image of a subject in synchronization with the cycle of an image vertical synchronizing signal in a cycle which is one-Nth (N being an integer) of the cycle of the image vertical synchronizing signal, a calculation section configured to calculate a focus evaluation value for performing automatic focusing based on an image pickup signal picked up by the image pickup section, a changing section configured to change the distance between a focusing lens and an image pickup sensor based on the focus evaluation value calculated by the calculation section, and a synthesis section configured to synthesize a plurality of image pickup signals picked up by the image pickup section, the calculation section being configured such that the cycle of the image vertical synchronizing signal and N times (N being an integer) the cycle in which the focus evaluation value is calculated by the calculation section and synchronized with each other and A times (A being an integer) the cycle of the image vertical synchronizing signal and B times (B being an integer) the cycle in which the distance is changed by the changing section are synchronized with each other where the integer A and the integer B satisfy a relationship of B > A.

The calculation section may be configured such that the focus evaluation value is calculated based on a high-frequency component of a luminance signal of the image pickup signal.

The synthesis section may be configured such that image pickup signals determined in advance are synthesized from among the plural image pickup signals picked up by the image pickup section.

An automatic focusing control method of the present invention includes an image pickup step of picking up an image of a subject in synchronization with the cycle of an image vertical synchronizing signal in a cycle which is one-Nth (N being an integer) of the cycle of the image vertical synchronizing signal, a calculation step of calculating a focus evaluation value for performing automatic focusing based on an image pickup signal picked up by the process at the image pickup step, a changing step of changing the distance between a focusing lens and an image pickup sensor based on the focus evaluation value calculated by the process at the calculation step, and a synthesis step of synthesizing a plurality of image pickup signals picked up by the process at the image pickup step, the cycle of the image vertical synchronizing signal and N times (N being an integer) the cycle in which the focus evaluation value is calculated by the process at the calculation step being synchronized with each other, A times (A being an integer) the cycle of the image vertical synchronizing signal and B times (B being an integer) the cycle in which the distance is changed by the process at the changing step being synchronized with each other where the integer A and the integer B satisfy a relationship of B > A.

A program recorded on or in a recording medium of the present invention causes a computer to execute an image pickup step of picking up an image of a subject in synchronization with the cycle of an image vertical synchronizing signal in a cycle which is one-Nth (N being an integer) of the cycle of the image vertical synchronizing signal, a calculation step of calculating a focus evaluation value for performing automatic focusing based on an image pickup signal picked up by the process at the image pickup step, a changing step of changing the distance between a focusing lens and an image pickup sensor based on the focus evaluation value calculated by the process at the calculation step, and a synthesis step of synthesizing a plurality of image pickup signals picked up by the process at the image pickup step, the cycle of the image vertical synchronizing signal and N times (N being an integer) the cycle in which the focus evaluation value is calculated by the process at the calculation step being synchronized with each other, A times (A being an integer) the cycle of the image vertical synchronizing signal and B times (B being an integer) the cycle in which the distance is changed by the changing section being synchronized with each other where the integer A and the integer B satisfy a relationship of B > A.

A program of the present invention causes a computer to execute a process including an image pickup step of picking up an image of a subject in synchronization with the cycle of an image vertical synchronizing signal in a cycle which is one-Nth (N being an integer) of the cycle of the image vertical synchronizing signal, a calculation step of calculating a focus evaluation value for performing automatic focusing based on an image pickup signal picked up by the process at the image pickup step, a changing step of changing the distance between the focusing lens and the image pickup sensor based on the focus evaluation value calculated by the process at the calculation step, and a synthesis step of synthesizing a plurality of image pickup signals picked up by the process at the image pickup step, the cycle of the image vertical synchronizing signal and N times (N being an integer) the cycle in which the focus evaluation value is calculated by the process at the calculation step being synchronized with each other, A times (A being an integer) the cycle of the image vertical synchronizing signal and B times (B being an integer) the cycle in which the distance is changed by the changing section being synchronized with each other where the integer A and the integer B satisfy a relationship of B > A.

In the present invention, an image of a subject is picked up in synchronization with the cycle of an image vertical synchronizing signal in a cycle which is one-Nth (N being an integer) of the cycle of the image vertical synchronizing signal, and a focusing evaluation value configured to perform automatic focusing is calculated based on the picked up image. Then, the distance between the focusing lens and the image pickup sensor is changed based on the focusing evaluation value, and a plurality of picked up image signals are synthesized. At this time, A times (A being an integer) the cycle of the image vertical synchronizing signal and B times (B being an integer) the cycle in which the distance is changed by the changing section are synchronized with each other where the integer A and the integer B satisfy a relationship of B > A.

### [Effect of the Invention]

With the present invention, automatic focusing can be implemented. Particularly, the automatic focusing response characteristic can be enhanced.
[Brief Description of the Drawings]
[FIG. 1] FIG. 1 is a block diagram showing an example of a configuration of a video camera in related art.
[FIG. 2] FIG. 2 is a view showing an example of variation of a focus evaluation value necessary for automatic focusing.
[FIG. 3] FIG. 3 is a flow chart illustrating a movement control process of a focusing lens.
[FIG. 4] FIG. 4 is a timing chart illustrating operation of the video camera of FIG. 1.
[FIG. 5] FIG. 5 is a timing chart illustrating another example of operation of the video camera of FIG. 1.
[FIG. 6] FIG. 6 is a block diagram showing an example of a configuration of a video camera to which the present invention is applied.
[FIG. 7] FIG. 7 is a timing chart illustrating operation of the video camera of FIG. 6.
[FIG. 8] FIG. 8 is a timing chart illustrating another example of operation of the video camera of FIG. 6.
[FIG. 9] FIG. 9 is a block diagram showing an example of a configuration of a personal computer.

### [Description of Reference Numerals]

1 lens block, 2 zoom lens, 3 focusing lens, 4 image pickup sensor, 5 camera signal processing section, 6 gate section, 7 AF detection section, 8 camera controller, 9 lens driver, 10, 11 motor, 12 image pickup device driver, 14 inputting section, 13 memory controller, 21 high-speed light exposure and high-speed wobbling AF module

### [Best Mode for Carring out the Invention]

In the following, an embodiment of the present invention is described with reference to the drawings.

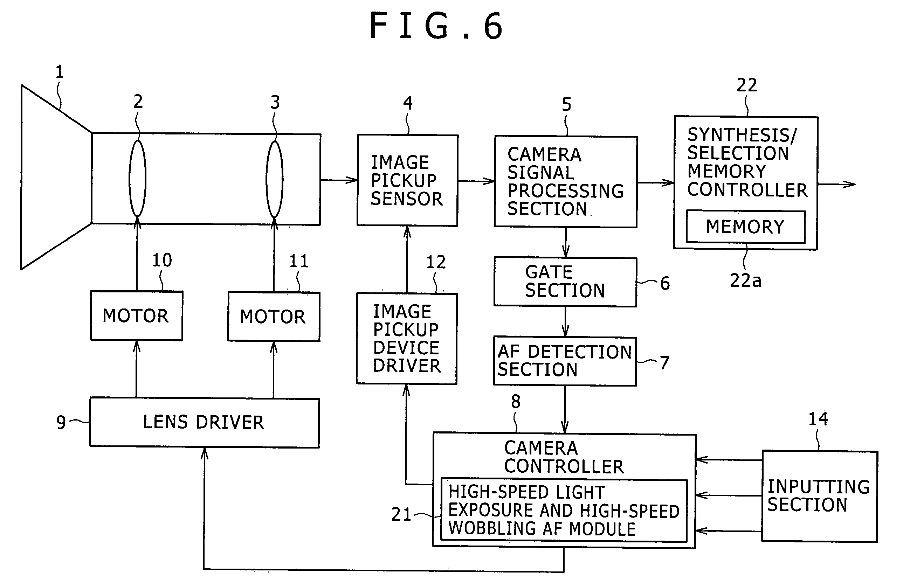

FIG. 6 is a block diagram showing an example of a configuration of a video camera to which the present invention is applied. It is to be noted that like elements to those of the video camera in related art are denoted by like reference numerals, and description of the like elements is suitably omitted.

An AF detection section 7 extracts high-frequency components of an image signal obtained by high-speed light exposure and performs rectification detection of the high-frequency components. Then, the AF detection section 7 produces a focus evaluation value necessary for automatic focusing and outputs the produced evaluation value to a high-speed light exposure and high-speed wobbling AF module 21 (hereinafter referred to simply as AF module 21) of a camera controller 8.

The AF module 21 of the camera controller 8 controls a lens driver 9 so as to perform automatic focusing driving based on the focus evaluation value produced from the image signal obtained by high-speed light exposure.

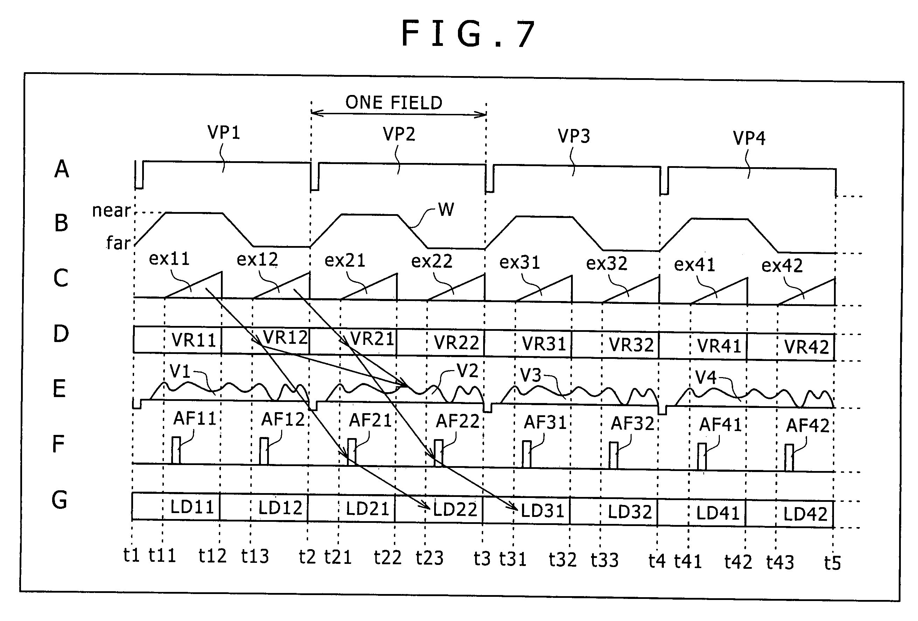

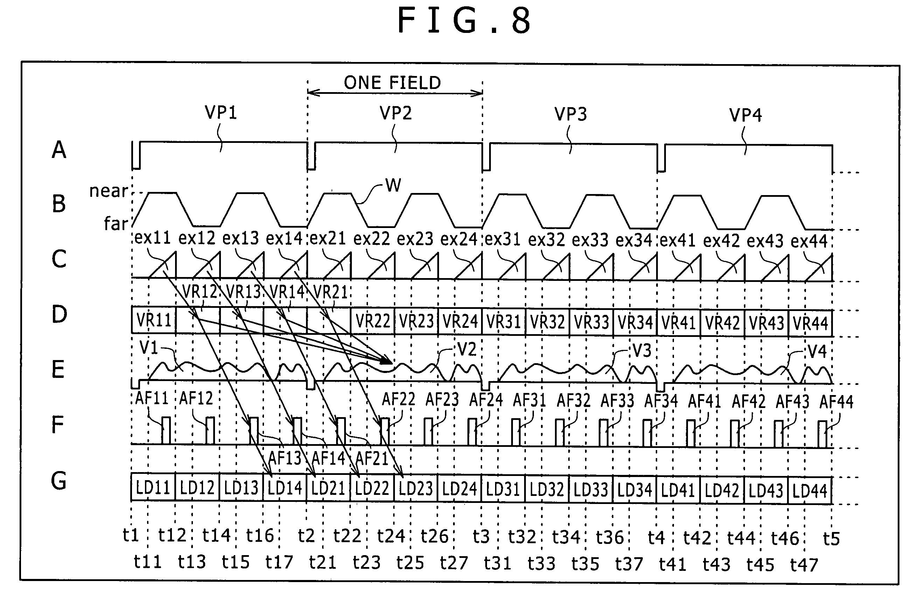

In particular, the AF module 21 controls the lens driver 9 so that the focusing position W of a focusing lens 3 is alternately wobbling focusing driven at a high speed in a far direction and a near direction for each of periods of time of one field. Further, the high-speed light exposure and high-speed wobbling AF module 21 controls an image pickup device driver 12 so that the image pickup sensor 4 is light exposed at a high speed by a number of times of image pickup greater than one every time an image vertical synchronizing signal is outputted once (per one field). It is to be noted that, while, in the present invention, high-speed light exposure is performed twice or 4 times per one field as hereinafter described with reference to timing charts of FIGS. 7 and 8, this is an example at all, and the number of times of high-speed light exposure is not limited to this.

A synthesis/selection memory controller 22 temporarily stores the image signals obtained by a plural number of times of light exposure per one field and inputted thereto from a camera signal processing section 5 into a memory 22a. The synthesis/selection memory controller 22 successively reads out the temporarily stored signals and synthesizes them into an image signal of one field as occasion demands. Then, the synthesis/selection memory controller 22 outputs the synthesized signal to a display unit so as to be displayed as an image or outputs the synthesized signal to a removable medium so as to be recorded on the removable medium. Further, the synthesis/selection memory controller 22 may perform synthesis of all of the image signals obtained by a plural number of times of light exposure into an image signal of one field as well as synthesis of, for example, image signals determined in advance (for example, only image signals obtained by first and second light exposure for the field) or selection of any one of image signals determined in advance (for example, an image signal obtained by first light exposure for the field).

Next, operation of the video camera of FIG. 6 is described with reference to a timing chart in FIG. 7. In this example, operation where light exposure by the image pickup sensor 4 is performed twice for each one field, and wobbling driving is performed in a cycle of one field is described.

The camera controller 8 outputs image vertical synchronizing signals VP1 to VP4 to the image pickup device driver 12 for periods of time from time t1 to time t2, from time t2 to time t3, from time t3 to time t4 and from time t4 to time t5, respectively (waveform A in FIG. 7). Each of the periods of the image vertical synchronizing signals represents a period of time of one field.

The focusing position of the focusing lens 3 is controlled in a unit of a field, and the focusing position W by wobbling is controlled so as to alternately move in a far direction and a near direction at intervals of a 1/4 field with a stopping period of time of 1/4 field interposed therebetween (waveform B in FIG. 7).

The image pickup device driver 12 controls the image pickup sensor 4 in synchronization with the image vertical synchronizing signal VP1 inputted thereto to perform light exposure ex11 and ex12 for periods of time from time t11 to time t12 and from time t13 to time t2, respectively (waveform C in FIG. 7).

Similarly, the image pickup device driver 12 controls the image pickup sensor 4 in synchronization with the inputted image vertical synchronizing signals VP2 to VP4 to perform light exposure ex21 and ex22 for periods of time from time t21 to time t22 and from time t23 to time t3, respectively, and perform light exposure ex31 and ex32 for periods of time from time t31 to time t32 and from time t33 to time t4, respectively, and then perform light exposure ex41 and ex42 for periods of time form time t41 to time t42 and time t43 to time t5, respectively.

The camera signal processing section 5 reads out the image signal obtained by the light exposure ex11 at a timing VR12 from time t12 to time t2, and reads out the image signal obtained by the light exposure ex12 at a timing VR21 from time t2 to time t22 (waveform D in FIG. 7). Similarly, the camera signal processing section 5 reads out the image signals obtained by the light exposure ex21 and ex22 at timings VR22 and VR31, respectively, and reads out the image signals obtained by the light exposure ex41 and ex42 at timings VR42 and VR51 (timing VR51 is not shown), respectively. The image signals read out by the camera processing section 5 are temporarily stored into the memory 22a of the synthesis/selection memory controller 22.

The synthesis/selection memory controller 22 synthesizes the two image signals read out by the camera signal processing section 5 and temporarily stored in the memory 22a into an image signal of one field or selects one of the two image signals to obtain each of image signals V1 to V4 (waveform E in FIG. 7). For example, the synthesis/selection memory controller 22 synthesizes the image signal read out at the timing VR12 and the image signal read out at the timing VR21 or selects one of the image signals to obtain the image signal V2.

The image signals read out by the camera signal processing section 5 are outputted also to a gate section 6. Here, though not shown, only an image signal corresponding to an AF detection gate frame which is an in-focus detection region within a screen set in advance is extracted by the gate section 6 from among the image signals inputted from the camera signal processing section 5. The extracted image signal is outputted to an AF detection section 7.

The AF detection section 7 extracts high-frequency components of the image signal read out at the timing VR12 at a timing of the AF detection gate frame and performs rectification detection, and produces a focus evaluation value necessary for automatic focusing just after the timing of the AF detection gate frame. Similarly, the AF detection section 7 extracts high-frequency components of the image signals read out at the timings VR21, VR22, VR31, VR32, VR41 and VR42 at the timing of the AF detection gate frame and perform rectification detection, and produces a focus evaluation value necessary for automatic focusing just after the timing of the AF detection gate frame.

The focus evaluation value produced by the AF detection section 7 is outputted to the AF module 21 of the camera controller 8.

The AF module 21 fetches the focus evaluation value produced just after the timing of the AF detection gate frame at a timing of an AF module AF21 (waveform F in FIG. 7). Then, the AF module 21 produces an automatic focusing control signal LD22 for bringing the focusing position of the focusing lens 3 close to an in-focus position and outputs the produced signal to the lens driver 9 (waveform G in FIG. 7). Similarly, the AF module 21 fetches the focus evaluation value produced just after the timing of the AF detection gate frame at a timing of an AF module AF22. Then the AF module 21 produces an automatic focusing signal LD31 for bringing the focusing position of the focusing lens 3 close to an in-focus position and outputs the produced signal to the lens driver 9.

The lens driver 9 controls driving of the motor 11 based on the inputted automatic focusing control signals LD11, LD12, LD21, LD22, LD31, LD32, LD41 and LD42 so that the focusing lens 3 is moved by a predetermined focusing lens movement amount. Automatic focusing is implemented in this manner.

Next, another example of operation of the video camera of FIG. 6 is described with reference to the timing chart in FIG. 8. In this example, operation where light exposure by the image pickup sensor 4 is performed four times for each one field and wobbling driving is performed in a cycle of a 1/2 field is described.

The camera controller 8 outputs the image vertical synchronizing signals VP1 to VP4 to the image pickup device driver 12 for periods of time from time t1 to time t2, from time t2 to time t3, from time t3 to time t4 and from time t4 to time t5, respectively (waveform A in FIG. 8). Each of the periods of times of the image vertical synchronizing signals represents a period of time of one field.

The focusing position of the focusing lens 3 is controlled in a unit of a field, and the focusing position W by wobbling is controlled so as to alternately move in a far direction and a near direction at intervals of one field with a stopping period of time of a 1/8 field interposed therebetween (waveform B in FIG. 8).

The image pickup device driver 12 controls the image pickup sensor 4 in synchronization with the image vertical synchronizing signal VP1 inputted thereto to perform light exposure ex11 to ex14 for periods of time from time t11 to time t12, from time t13 to time t14, from time t15 to time t16 and from time t17 to time t2, respectively (waveform C in FIG. 8).

Similarly, the image pickup device driver 12 controls the image pickup sensor 4 in synchronization with the image vertical synchronizing signals VP2 to VP4 inputted thereto to perform light exposure ex21 to ex24 for periods of time from time t21 to time t22, from time t23 to time t24, time t25 to time t26 and time t27 to time t3, respectively, and perform light exposure ex31 to ex34 for periods of time from time t31 to time t32, from time t33 to time t34, from time t35 to time t36 and time t37 to time 4, respectively, then perform light exposure ex41 to ex44 for periods of time from time t41 to time t42, from time t43 to time t44, from time t45 to time t46 and time t47 to time t5.

The camera signal processing section 5 reads out the image signal obtained by light exposure ex11 at a timing VR12 from time t12 to time t14 and reads out the image signal obtained by light exposure ex12 at a timing VR13 from time t14 to time t16, and reads out the image signal obtained by light exposure ex13 at a timing VR14 from time t16 to time t2 and reads out the image signal obtained by light exposure ex14 at a timing VR21 from time t2 to time t22 (waveform D in FIG. 8). Similarly, the camera signal processing section 5 reads out the image signals obtained by light exposure ex21 to ex24 at timings VR22 to VR24 and VR31, respectively, and reads out the image signals obtained by light exposure ex31 to ex34 at timings VR32 to VR34 and VR41, respectively, and then reads out the image signals obtained by light exposure ex41 to ex44 at timings VR42 to VR44 and VR51 (timing VR51 is not shown), respectively. The image signals read out by the camera signal processing section 5 are temporarily stored into the memory 22a of the synthesis/selection memory controller 22.

The synthesis/selection memory controller 22 synthesizes the four image signals read out by the camera signal processing section 5 and temporarily stored in the memory 22a into an image signal of one field or synthesizes some image signals determined in advance (for example, image signals obtained by first and second light exposure of the field) into an image signal of one field, or selects any one of image signals (for example, the image signal obtained by first light exposure of the field) so that image signals V1 to V4 are obtained (waveform E in FIG. 8).

For example, the synthesis/selection memory controller 22 synthesizes the four image signals read out at timings VR12 to VR14 and VR21 or synthesizes any two of the image signals (for example, image signals read out at timings VR12 and VR13) so that the image signal V2 is obtained. The method for obtaining the image signals V1 to V4 is not limited to this, and, for example, any three of image signals (for example, the image signals read out at timings VR12 to VR14) may be synthesized, or any one of four image signals read out at timings VR12 to VR14 and VR21 may be selected.

The image signals read out by the camera signal processing section 5 are outputted also to the gate section 6. Here, though not shown, only an image signal corresponding to the AF detection gate frame which is an in-focus detection region within a screen set in advance is extracted from within the image signals inputted from the camera signal processing section 5 by the gate section 6, and the extracted image signal is outputted to the AF detection section 7.

The AF detection section 7 extracts high-frequency components of the image signal read out at the timing VR12 at a timing of the AF detection gate frame and performs rectification detection, and produces a focus evaluation value necessary for automatic focusing just after the timing of the AF detection gate frame. Similarly, the AF detection section 7 extracts high-frequency components of each of the image signals read out at the timings VR13, VR14, VR21 to VR24, VR31 to VR34 and VR41 to VR44 at the timing of the AF detection gate frame and performs rectification detection, and produces a focus evaluation value necessary for automatic focusing just after the timing of the AF detection gate frame.

The focus evaluation value produced by the AF detection section 7 is outputted to the AF module 21 of the camera controller 8.

The AF module 21 fetches the focus evaluation value produced just after the timing of the AF detection gate frame at a timing of an AF module AF13 (waveform F in FIG. 8), and produces an automatic focusing control signal LD14 for bringing the focusing position of the focusing lens 3 close to an in-focus position and outputs the produced signal to the lens driver 9 (waveform G in FIG. 8). Similarly, the AF module 21 fetches the focus evaluation value produced just after the timing of the AF detection gate frame at a timing of an AF module AF14, and produces an automatic focusing control signal LD 21 for bringing the focusing position of the focusing lens 3 close to an in-focus position and outputs the produced signal to the lens driver 9.

The lens driver 9 controls driving of the motor 11 based on the automatic focusing control signals LD11 to LD14, LD21 to LD24, LD31 to LD34 and LD41 to LD44 inputted thereto so that the focusing lens 3 is moved by a predetermined focusing lens movement amount. The automatic focusing is implemented in this manner.

While, in the example described above, the focus evaluation value is calculated twice or 4 times for each image vertical synchronizing signal and the fine wobbling in-focus driving is performed once or twice for each image vertical synchronizing signal, the present invention is not limited to this. For example, where integers A and B satisfy a relationship of B > A, the focus evaluation value can be calculated N times (N being an integer) for each image vertical synchronizing signal and the fine wobbling in-focus driving can be performed B times (B being an integer) for the A times (A being an integer) of the image vertical synchronizing signal. More particularly, the focus evaluation value can be calculated three times for each image vertical synchronizing signal, and the fine wobbling in-focus driving can be performed 6 times for four times of the image vertical synchronizing signal.

It is to be noted that, while the fine wobbling in-focus driving is performed in the example described above, the fine wobbling in-focus driving need not always be performed.

By performing high-speed light exposure by a plural number of times within an image signal of one field as described above, a focus evaluation value can be produced by a plural number of times for each one field. Consequently, automatic focusing control can be performed by a plural number of time for each one field. Further, since the timing for producing a focus evaluation value becomes quicker, the automatic focusing response characteristic can be improved.

It is to be noted that, while the example is described above wherein the present invention is applied to a video camera, the present invention can naturally be applied to a digital still camera.

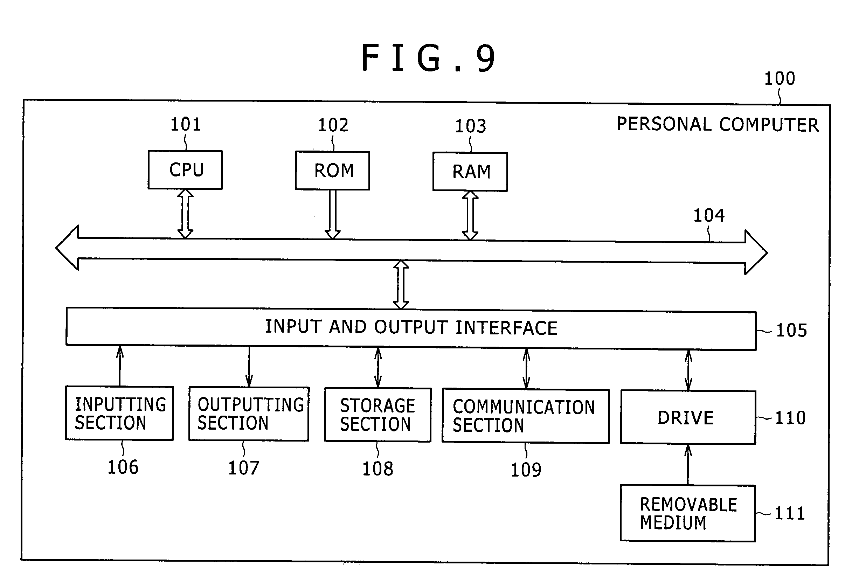

While the series of processes described above can be executed by hardware, it may otherwise be executed by software. In this instance, for example, such a computer as shown in FIG. 9 is included in a video camera.

Referring to FIG. 9, a CPU (central processing unit) 101 executes various processes in accordance with a program stored in a ROM (Read Only Memory) 102 or a program loaded from a storage section 108 into a RAM (Random Access Memory) 103. Also data necessary for the CPU 101 to execute the processes are suitably stored into the RAM 103.

The CPU 101, ROM 102 and RAM 103 are connected to one another by a bus 104. Also an input/output interface 105 is connected to the bus 104.

An inputting section 106 including a keyboard, a mouse and so forth, an outputting section 107 including a display unit which may be a CRT (Cathode Ray Tube) or an LCD (Liquid Crystal Display) unit, a speaker and so forth, a storage section 108 formed from a hard disk or the like, a communication section 109 including a modem and so forth are connected to the input/output interface 105. The communication section 109 performs a communication process through a network such as the Internet.

Further, as occasion demands, a drive 110 is connected to the input/output interface 105. A removable medium 111 such as a magnetic disk, an optical disk, a magneto-optical disk, a semiconductor memory or the like is suitably loaded into the drive 110, and a computer program read out from the loaded medium is installed into the storage section 108 as occasion demands.

Where the series of processes described above is executed by software, a program which constructs the software is installed from a network or a recording medium.

The recording medium is formed as a removable medium 111 formed from, as shown in FIG. 9, a magnetic disk (including a floppy disc (registered trademark)), an optical disk (including a CD-ROM (Compact Disk-Read Only Memory) and a DVD (Digital Versatile Disk)), or a magneto-optical disk (including an MD (Mini Disk) (registered trademark)), or a semiconductor memory which has the program recorded thereon or therein and is distributed to distribute the program to a user separately from an apparatus body. Else, the recording medium is formed as a ROM 102, a hard disc included in the storage section 108 or the like in which the program is recorded and which is provided to a user in a state wherein the program is incorporated in a computer.

It is to be noted that, in the present specification, the steps which describe the program recorded in or on a recording medium may be but need not necessarily be processed in a time series in the order as described, and include processes which are executed in parallel or individually without being processed in a time series.

## Claims

1. An automatic focusing control apparatus having a focusing lens and an image pickup sensor, comprising:
an image pickup section configured to pick up an image of a subject in synchronization with the cycle of an image vertical synchronizing signal in a cycle which is one-Nth (N being an integer) of the cycle of the image vertical synchronizing signal;
a calculation section configured to calculate a focus evaluation value for performing automatic focusing based on an image pickup signal picked up by said image pickup section;
a changing section configured to change the distance between said focusing lens and said image pickup sensor based on the focus evaluation value calculated by said calculation section; and
a synthesis section configured to synthesize a plurality of image pickup signals picked up by said image pickup section, wherein
the cycle of the image vertical synchronizing signal and N times (N being an integer) the cycle in which the focus evaluation value is calculated by said calculation section are synchronized with each other, and
A times (A being an integer) the cycle of the image vertical synchronizing signal and B times (B being an integer) the cycle in which the distance is changed by said changing section are synchronized with each other where the integer A and the integer B satisfy a relationship of B > A.

2. The automatic focusing control apparatus as set forth in claim 1, wherein
said calculation section calculates the focus evaluation value based on a high-frequency component of a luminance signal of the image pickup signal.

3. The automatic focusing control apparatus as set forth in claim 1, wherein
said synthesis section synthesizes image pickup signals determined in advance from among the plural image pickup signals picked up by said image pickup section.

4. An automatic focusing control method for an automatic focusing control apparatus having a focusing lens and an image pickup sensor, comprising:
an image pickup step of picking up an image of a subject in synchronization with the cycle of an image vertical synchronizing signal in a cycle which is one-Nth (N being an integer) of the cycle of the image vertical synchronizing signal;
a calculation step of calculating a focus evaluation value for performing automatic focusing based on an image pickup signal picked up by the process at the image pickup step;
a changing step of changing the distance between said focusing lens and said image pickup sensor based on the focus evaluation value calculated by the process at the calculation step; and
a synthesis step of synthesizing a plurality of image pickup signals picked up by the process at the image pickup step, wherein
the cycle of the image vertical synchronizing signal and N times (N being an integer) the cycle in which the focus evaluation value is calculated by the process at the calculation step are synchronized with each other, and
A times (A being an integer) the cycle of the image vertical synchronizing signal and B times (B being an integer) the cycle in which the distance is changed by the process at the changing step are synchronized with each other where the integer A and the integer B satisfy a relationship of B > A.

5. A recording medium on or in which a computer-readable program for an automatic focusing control process for an automatic focusing control apparatus having a focusing lens and an image pickup sensor is recorded, the program comprising:
an image pickup step of picking up an image of a subject in synchronization with the cycle of an image vertical synchronizing signal in a cycle which is one-Nth (N being an integer) of the cycle of the image vertical synchronizing signal;
a calculation step of calculating a focus evaluation value for performing automatic focusing based on an image pickup signal picked up by the process at the image pickup step;
a changing step of changing the distance between said focusing lens and said image pickup sensor based on the focus evaluation value calculated by the process at the calculation step; and
a synthesis step of synthesizing a plurality of image pickup signals picked up by the process at the image pickup step, wherein
the cycle of the image vertical synchronizing signal and N times (N being an integer) the cycle in which the focus evaluation value is calculated by the process at the calculation step are synchronized with each other, and
A times (A being an integer) the cycle of the image vertical synchronizing signal and B times (B being an integer) the cycle in which the distance is changed by said changing section are synchronized with each other where the integer A and the integer B satisfy a relationship of B > A.

6. A program configured to cause a computer to perform an automatic focusing control process for an automatic focusing control apparatus having a focusing lens and an image pickup sensor, said program causing the computer to execute:
an image pickup step of picking up an image of a subject in synchronization with the cycle of an image vertical synchronizing signal in a cycle which is one-Nth (N being an integer) of the cycle of the image vertical synchronizing signal;
a calculation step of calculating a focus evaluation value for performing automatic focusing based on an image pickup signal picked up by the process at the image pickup step;
a changing step of changing the distance between said focusing lens and said image pickup sensor based on the focus evaluation value calculated by the process at the calculation step; and
a synthesis step of synthesizing a plurality of image pickup signals picked up by the process at the image pickup step, wherein
the cycle of the image vertical synchronizing signal and N times (N being an integer) the cycle in which the focus evaluation value is calculated by the process at the calculation step are synchronized with each other, and
A times (A being an integer) the cycle of the image vertical synchronizing signal and B times (B being an integer) the cycle in which the distance is changed by said changing section are synchronized with each other where the integer A and the integer B satisfy a relationship of B > A.
